# EUROPEAN PATENT APPLICATION

(11) **EP 4 592 930 A1**
(43) Date of publication of application: **30.07.2025**
(21) Application number: 23888944.8
(22) Date of filing: 12.10.2023
(51) Int. Cl.: G06Q 20/14

(54) **SERVER AND CHARGING SYSTEM COMPRISING SAME**

(30) Priority: 09.11.2022 KR 20220149083
(71) Applicant: LG Energy Solution, Ltd., Seoul 07335 (KR)
(72) Inventor: PARK, Ki Bum, Daejeon 34122 (KR)
(74) Representative: Goddar, Heinz J.
(86) International application number: PCT/KR2023/015737
(87) International publication number: WO 2024/101681

(57) **Abstract**

A server includes a communication circuit configured to receive first charging information from an information collection device connected to a target device and receive second charging information transmitted from a charger corresponding to the target device from a charging server, and a controller configured to manage a connection of the charger to the target device and a fee related to the use of the charger based on the first charging information and the second charging information.

## Description

### [TECHNICAL FIELD]

### CROSS-REFERENCE TO RELATED APPLICATION

This application claims priority to and the benefit of Korean Patent Application No. 10-2022-0149083 filed in the Korean Intellectual Property Office on November 9, 2022, the entire contents of which are incorporated herein by reference.

### TECHNICAL FIELD

Embodiments disclosed herein relate to a server and a charging system including the same.

### [BACKGROUND ART]

As environmental problems become more important, the supply of eco-friendly electric transportation devices is expanding. Therefore, an infrastructure (e.g., a charger or a charging station) for the use of electric transportation devices is gradually being constructed. For example, a user of an electric transportation device performs authentication through an external identification means (EIM) method based on an RFID card or a QR code or a plug and charge (PnC) method based on a certificate within the electric transportation device, and when the authentication is finished, a charging system for charging the electric transportation device based on power provided from the charger is being supplied.

Meanwhile, the PnC method is a charging technology in which authentication and payment are automatically performed when electric vehicles are charged. The charging of the PnC method has an advantage in that the user does not have to directly handle various processes for personal identification, but may only be used in vehicles that support the PnC, and even in the case of the vehicles that support the PnC, there is a disadvantage in that a charger that works with the corresponding vehicle should be used.

### [TECHNICAL PROBLEM]

Embodiments disclosed herein are directed to providing a server, a charging server, and a charging system, which may unify a plug and charge (PnC) charging method.

Embodiments disclosed herein are directed to providing a server, a charging server, and a charging system, which may also perform a PnC charging on a vehicle that does not support the PnC.

The objects of the embodiments disclosed herein are not limited to the above-described objects, and other objects that are not mentioned will be able to be clearly understood by those skilled in the art from the following description.

### [TECHNICAL SOLUTION]

A server according to one embodiment disclosed herein includes a communication circuit configured to receive first charging information from an information collection device connected to a target device and receive second charging information transmitted from a charger corresponding to the target device from a charging server, and a controller configured to manage a connection of the charger to the target device and a fee related to the use of the charger based on the first charging information and the second charging information.

According to one embodiment, the controller may recognize the information collection device connected to the target device and check user authentication information and payment information of the target device based on identification information of the recognized information collection device.

According to one embodiment, the communication circuit may transmit charging approval information and billing completion information to the charging server.

According to one embodiment, the communication circuit may transmit the charging approval information and the billing completion information to the information collection device through a long term evolution (LTE) communication network.

According to one embodiment, the first charging information may include connection information about the charger and the target device recognized by the information collection device, and the second charging information may include connection information about the charger and the target device recognized by the charger.

According to one embodiment, the first charging information may include charging state information about the target device.

According to one embodiment, the first charging information may include a power usage of the charger recognized by the information collection device, and the second charging information may include a power usage of the charger recognized by the charger.

According to one embodiment, the controller may calculate a fee billed to a user of the target device using the first charging information and the second charging information.

A charging server according to one embodiment disclosed herein includes a communication circuit configured to transmit second charging information received from a charger to a management server and receive control information related to an operation of the charger from the management server, and a controller configured to control the operation of the charger based on the control information.

According to one embodiment, the controller may control the charger to charge a target device based on the control information.

According to one embodiment, the communication circuit may transmit billing completion information to the charger when receiving the billing completion information from the management server.

A charging system according to one embodiment disclosed herein includes a management server configured to receive first charging information from an information collection device connected to a target device, and a charging server configured to receive second charging information from a charger corresponding to the target device and transmit the second charging information to the management server, wherein the management server aggregates the first charging information and the second charging information and manages a connection of the charger to the target device and a fee related to the use of the charger.

According to one embodiment, the management server may transmit control information related to an operation of the charger to the charging server, and the charging server may control the operation of the charger based on the control information.

According to one embodiment, the management server may recognize an information collection device connected to the target device and check user authentication information and payment information of the target device based on identification information of the recognized information collection device.

Detailed matters of other embodiments are included in a detailed description and accompanying drawings.

### [ADVANTAGEOUS EFFECTS]

According to the server, the charging server, and the charging system according to the embodiments disclosed herein, it is possible to unify the PnC charging method.

According to the server, the charging server, and the charging system according to the embodiments disclosed herein, the vehicle that does not support the PnC can use the PnC charging.

### [DESCRIPTION OF DRAWINGS]

FIG. 1 is a block diagram illustrating a charging system according to one embodiment disclosed herein.
FIG. 2 is a block diagram illustrating a management server according to one embodiment disclosed herein.
FIG. 3 is a block diagram illustrating a charging server according to one embodiment disclosed herein.
FIG. 4 is a flowchart illustrating a charging method according to one embodiment disclosed herein.
FIG. 5 is a flowchart specifically illustrating an operation of authenticating a user of a target device in FIG. 4.
FIG. 6 is a flowchart specifically illustrating an operation of billing a fee to the user of the target device in FIG. 4.

### [MODE FOR INVENTION]

Hereinafter, embodiments disclosed herein will be described in detail with reference to exemplary drawings. In adding reference numerals to components in each drawing, it should be noted that the same components have the same reference numerals as much as possible even when they are illustrated in different drawings. In addition, in describing embodiments disclosed herein, the detailed description of related known configurations or functions will be omitted when it is determined that the detailed description obscures the understanding of the embodiments disclosed herein.

The terms, such as first and second, may be used to describe components of the embodiments disclosed herein. These terms are only for the purpose of distinguishing one component from another, and the nature, sequence, order, or the like of the corresponding component is not limited by the terms. In addition, unless otherwise defined, all terms (including technical and scientific terms) used herein have the same meanings as those commonly understood by those skilled in the art to which embodiments disclosed herein pertains. The terms defined in a generally used dictionary should be construed as meanings that match with the meanings of the terms from the context of the related technology and are not construed as an ideal or excessively formal meaning unless clearly defined in this application.

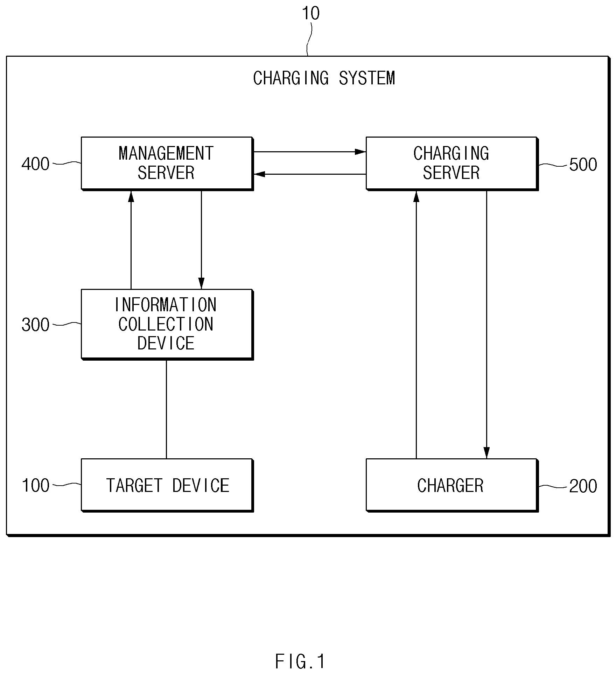

FIG. 1 is a block diagram illustrating a charging system according to one embodiment disclosed herein.

Referring to FIG. 1, a charging system 10 according to one embodiment of the present invention may include a target device 100, a charger 200, an information collection device 300, a management server 400, and a charging server 500.

The target device 100 may be a device driven by being charged by the charger 200. In other words, the target device 100 may be charged based on the power provided from the charger 200. The target device 100 may be charged after being directly or indirectly connected to the charger 200 for charging and separated from the charger 200 and driven independently. According to an embodiment, the target device 100 may be an electric vehicle (EV).

The charger 200 may charge the target device 100. The charger 200 may charge the target device 100 by providing power to the target device 100. According to an embodiment, the charger 200 may supply power to the target device 100 or stop supplying the power under the control of the charging server 500. In other words, the charger 200 may be driven based on control information received from the charging server 500.

The charger 200 may generate second connection information. The charger 200 may recognize the target device 100 connected to the charger 200 through at least one power cable included in a power line of the charger 200. According to an embodiment, the charger 200 may acquire information about the target device 100 through the power line. The charger 200 may generate the second connection information based on the acquired information about the target device 100. The second connection information may include whether the charger 200 and the target device 100 are connected, a connection time, state of charge (SoC) information, and the like. SoC is a value expressed as a percentage by dividing a currently usable battery capacity by a total capacity to indicate the remaining capacity of a battery.

The charger 200 may generate second charging information. According to an embodiment, the charger 200 may store power usage used to charge the target device 100. The charger 200 may generate the second charging information based on the power usage. The second charging information may include the power usage of the charger 200. According to an embodiment, the second charging information may include charging state information of the target device 100.

The charger 200 may transmit the second connection information and the second charging information to the charging server 500.

The information collection device 300 may generate first connection information. The information collection device 300 may collect information about the target device 100. The information collection device 300 may collect information generated from various sensors or a controller in the target device 100. In other words, the first connection information may include the information about the target device 100. According to an embodiment, the first connection information may include whether the target device 100 and the charger 200 are connected, the connection time, the SoC information, and the like collected by the information collection device 300. According to an embodiment, the information collection device 300 may include an on-board diagnostics (OBD) device.

The information collection device 300 may generate first charging information. According to an embodiment, the information collection device 300 may store the power usage received by the target device 100 from the charger 200. According to another embodiment, the information collection device 300 may store the power usage used by the charger 200 to charge the target device 100. The information collection device 300 may generate first charging information based on the power usage. The first charging information may include the power usage of the charger 200 or the power usage received by the target device 100 from the charger 200. According to an embodiment, the first charging information may include charging state information of the target device 100.

The information collection device 300 may transmit the first connection information and the first charging information to the management server 400.

The management server 400 may aggregate information related to the charging of the target device 100. In other words, the management server 400 may aggregate the first connection information, the second connection information, the first charging information, and the second charging information.

According to an embodiment, the management server 400 may receive the first connection information from the information collection device 300 and receive the second connection information from the charging server 500. The management server 400 may match the first connection information with the second connection information and aggregate the first connection information and the second connection information. The management server 400 may compare whether the target device 100 and the charger 200 included in the first connection information are connected, the connection time, and the SoC information to whether the charger 200 and the target device 100 included in the second connection information are connected, the connection time, and the SoC information.

According to an embodiment, the management server 400 may receive the first charging information from the information collection device 300 and receive the second charging information from the charging server 500. The management server 400 may match the first charging information with the second charging information and aggregate the first charging information and the second charging information. The management server 400 may aggregate the power usage of the charger 200 included in the first charging information and the power usage of the charger 200 included in the second charging information.

The management server 400 may check user authentication information and payment information of the target device 100. According to an embodiment, the management server 400 may recognize the information collection device 300 connected to the target device 100 and specify the user of the target device 100 based on identification information about the recognized information collection device 300. In addition, the management server 400 may check user authentication information and payment information about a specific user.

The management server 400 may manage the charging of the target device 100 of the charger 200. The management server 400 may control the charging server 500. The management server 400 may transmit control information to the charging server 500 based on the first connection information and the second connection information. According to an embodiment, the control information may include charging approval information, charging start information, and billing completion information. According to an embodiment, the management server 400 may transmit the charging approval information, the charging start information, and the billing completion information to the information collection device 300.

The management server 400 may manage the cost related to the use of the charger 200 of the target device 100. The management server 400 may calculate the charging cost based on the first charging information and the second charging information. The management server 400 may calculate the charging cost based on the power usage of the charger 200 acquired by aggregating the first charging information and the second charging information.

The management server 400 may bill a charging fee to the user of the target device 100 through a preset payment device. The management server 400 may recognize the information collection device 300, identify the user, and extract data related to the identified user from stored user data. The management server 400 may bill a fee to the user based on the extracted data.

The management server 400 may manage the charging of the target device 100 by controlling the information collection device 300 and the charging server 500 to unify the PnC charging method. In other words, the PnC charging methods of various chargers and charging servers may be unified into one method rather than different methods for each individual charging server 500 by protocols of the management server 400 and the charging server 500.

In addition, not only vehicles that support the PnC charging method, but also vehicles that do not support the PnC charging method may arrange the information collection device 300 and use the PnC charging method.

The charging server 500 may transmit and receive information with the management server 400 and the charger 200. The charging server 500 may receive information from the charger 200 and transmit the information to the charger 200. The charging server 500 may receive the second connection information and the second charging information from the charger 200. The charging server 500 may transmit control information to the charger 200. The charger 200 may start charging the target device 100 based on the control information. In other words, the control information may include charging approval information.

Meanwhile, the charging server 500 may transmit the information to the management server 400 and receive the information from the management server 400. The charging server 500 may transmit the second connection information and the second charging information received from the charger 200 to the management server 400. The charging server 500 may receive control information related to the operation of the charger 200 from the management server 400.

The charging server 500 may control the operation of the charger 200. The charging server 500 may control the charger 200 to charge the target device 100. According to an embodiment, the charging server 500 may transmit the control information to the charger 200, and the charger 200 may start charging the target device 100 based on the control information received from the charging server 500.

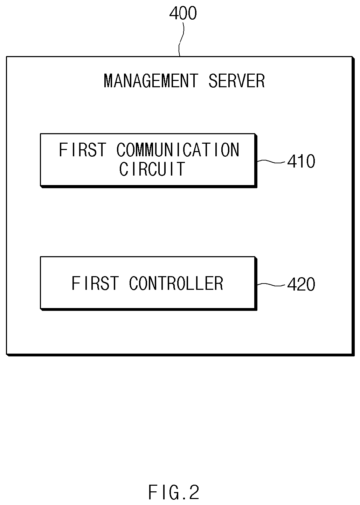

FIG. 2 is a block diagram illustrating a management server according to one embodiment disclosed herein.

Referring to FIG. 2, the management server 400 may include a first communication circuit 410 and a first controller 420.

The first communication circuit 410 may transmit and receive information related to the charging of the target device 100. According to an embodiment, the first communication circuit 410 may receive the first connection information and the first charging information from the information collection device 300 and receive the second connection information and the second charging information from the charging server 500.

According to an embodiment, the first communication circuit 410 may transmit the control information to the charging server 500. The control information transmitted by the first communication circuit 410 to the charging server 500 may include the charging approval information, the charging start information, and the billing completion information. In other words, the first communication circuit 410 may transmit the charging approval information, the charging start information, and the billing completion information to the charging server 500.

In addition, the first communication circuit 410 may transmit the charging approval information, the charging start information, and the billing completion information to the information collection device 300. According to an embodiment, the first communication circuit 410 may transmit the charging approval information, the charging start information, and the billing completion information to the information collection device 300 through a long term evolution (LTE) communication network.

The first communication circuit 410 may transmit the received first connection information, first charging information, second connection information, and second charging information to the first controller 420.

The first controller 420 may aggregate the information related to the charging of the target device 100. In other words, the first controller 420 may aggregate the first connection information, the second connection information, the first charging information, and the second charging information. The first controller 420 may receive the first connection information, the second connection information, the first charging information, and the second charging information from the first communication circuit 410. To this end, the first controller 420 may be connected to the first communication circuit 410. The first controller 420 may match the first connection information with the second connection information and aggregate the first connection information and the second connection information.

The first controller 420 may compare whether the target device 100 and the charger 200 included in the first connection information are connected, the connection time, and the SoC information to whether the charger 200 and the target device 100 included in the second connection information are connected, the connection time, and the SoC information.

The first controller 420 may match the first charging information with the second charging information and aggregate the first charging information and the second charging information. The first controller 420 may aggregate the power usage of the charger 200 included in the first charging information and the power usage of the charger 200 included in the second charging information.

The first controller 420 may check user authentication information and payment information of the target device 100. According to an embodiment, the first controller 420 may recognize the information collection device 300 connected to the target device 100 and specify the user of the target device 100 based on the identification information about the recognized information collection device 300.

The first controller 420 may recognize the information collection device 300 for transmitting the information to the first communication circuit 410 through the first communication circuit 410. The first controller 420 may check the identification information about the recognized information collection device 300. The first controller 420 may specify the user of the target device 100 to which the information collection device 300 is connected based on the identification information of the information collection device 300. The first controller 420 may check user authentication information and payment information of a specific user.

The first controller 420 may manage costs related to the use of the charger 200 of the target device 100. The first controller 420 may calculate the charging cost based on the first charging information and the second charging information. The first controller 420 may calculate the charging cost based on the power usage acquired by aggregating the first charging information and the second charging information.

The first controller 420 may bill a charging fee to the user of the target device 100 through a preset payment method. The first controller 420 may recognize the information collection device 300 for transmitting the information to the first communication circuit 410, identify the user, and extract the data related to the identified user from the stored user data. The first controller 420 may bill a fee to the user based on the extracted data.

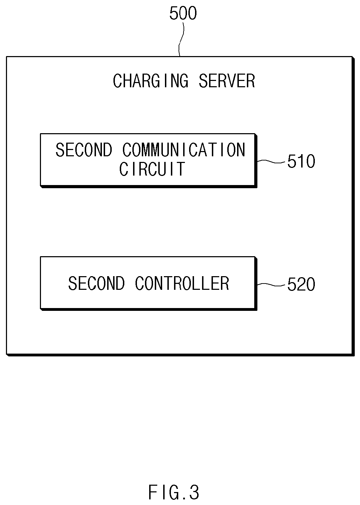

FIG. 3 is a block diagram illustrating a charging server according to one embodiment disclosed herein.

Referring to FIG. 3, the charging server 500 may include a second communication circuit 510 and a second controller 520.

The second communication circuit 510 may transmit and receive the information with the first communication circuit 410 and the charger 200. The second communication circuit 510 may receive the information from the charger 200 and transmit the information to the charger 200. The second communication circuit 510 may receive the second connection information and the second charging information from the charger 200. The second communication circuit 510 may transmit the control information to the charger 200. The charger 200 may start charging the target device 100 based on the control information. In other words, the control information may include charging approval information.

Meanwhile, the second communication circuit 510 may transmit the information to the first communication circuit 410 and receive the information from the first communication circuit 410. The second communication circuit 510 may transmit the second connection information and the second charging information received from the charger 200 to the first communication circuit 410. The second communication circuit 510 may receive the control information related to the operation of the charger 200 from the first communication circuit 410. The control information received by the second communication circuit 510 from the first communication circuit 410 may include the charging approval information, the charging start information, and the billing completion information.

The second communication circuit 510 may transmit the billing completion information to the charger 200.

The second controller 520 may control the operation of the charger 200. The second controller 520 may control the charger 200 to charge the target device 100 based on the control information. According to an embodiment, the second controller 520 may receive the control information from the second communication circuit 510. The second controller 520 may convert the received control information into control information that may be recognized by the charger 200.

The second controller 520 may control the operation of the charger 200. The second controller 520 may transmit the control information to the charger 200 by controlling the second communication circuit 510. The charger 200 may start charging the target device 100 based on the control information received from the second controller 520. In other words, the first controller 420 may control the operation of the charger 200 through the second controller 520.

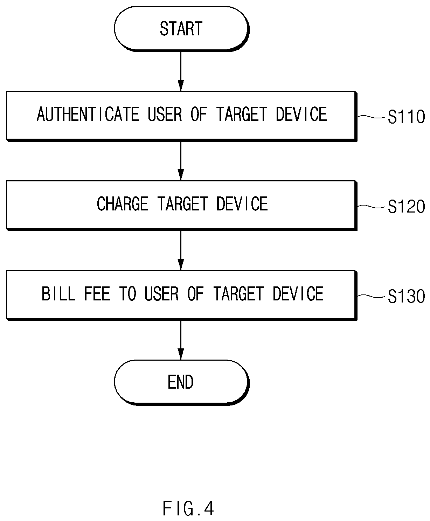

FIG. 4 is a flowchart illustrating a charging method according to one embodiment disclosed herein.

Referring to FIG. 4, the charging method according to one embodiment may include an operation of authenticating the user of the target device 100 (S110), an operation of charging the target device 100 (S120), and an operation of billing a fee to the user of the target device 100 (S130).

Hereinafter, operations S110 to S130 will be described in detail with reference to FIG. 1.

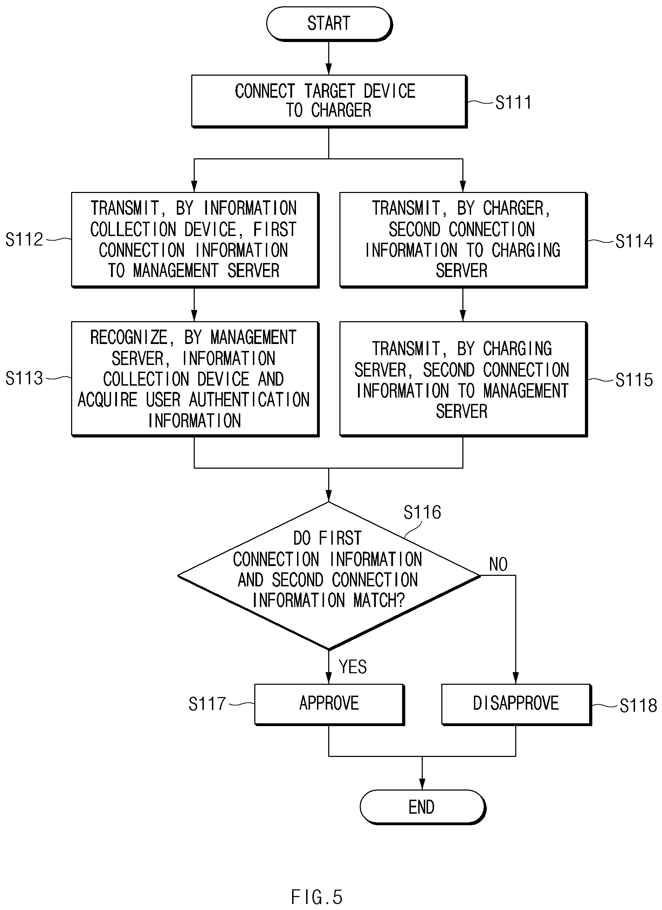

In operation S110, the management server 400 may authenticate the user of the target device 100. When the target device 100 and the charger 200 are connected, the information collection device 300 may transmit information about the connection of the charger 200 to the management server 400. In addition, the charger 200 may transmit the information about the connection of the charger 200 to the charging server 500, and the charging server 500 may transmit the information received from the charger 200 to the management server 400. The management server 400 may authenticate the user by specifying the information collection device 300 transmitting the information to the management server 400. In addition, the management server 400 may approve charging after aggregating the information received from the information collection device 300 and the charging server 500. Operation S110 will be described below in detail with reference to FIG. 5.

After operation S110, operation S120 may be performed.

In operation S120, the charger 200 may charge the target device 100. The management server 400 may transmit the control information to the charging server 500, and the charging server 500 may convert the control information received from the management server 400. The charging server 500 may transmit the control information to the charger 200. The control information may include the charging approval information. The charger 200 may receive the control information from the charging server 500 and start charging the target device 100. The charger 200 may end charging when the charging of the target device 100 is finished.

After operation S120, operation S130 may be performed.

In operation S130, the management server 400 may bill a fee to the user of the target device 100. When charging is finished, the information collection device 300 may transmit information about charging completion and power usage to the management server 400. In addition, the charger 200 may transmit the information about the charging completion and the power usage to the charging server 500, and the charging server 500 may transmit the information received from the charger 200 to the management server 400. The management server 400 may calculate the charging fee by aggregating the information received from the information collection device 300 and the charging server 500. In other words, the management server 400 may calculate the charging fee based on the power usage received from the information collection device 300 and the charging server 500.

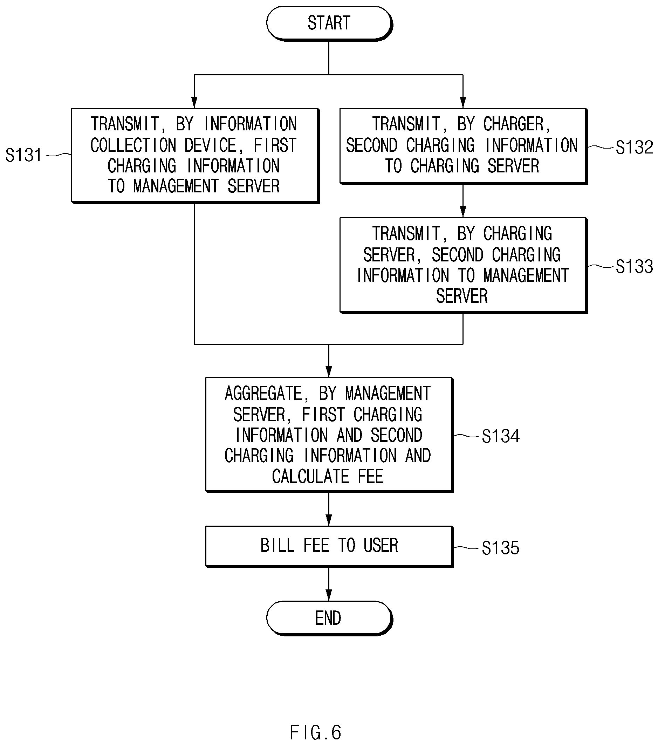

The management server 400 may bill the charging fee to the user. In operation S110, the management server 400 may charge the charging fee to a specific user according to a pre-stored payment method. Operation S130 will be described below in detail with reference to FIG. 6.

FIG. 5 is a flowchart specifically illustrating an operation of authenticating a user of a target device in FIG. 4.

The embodiment illustrated in FIG. 5 is only one embodiment, the order of operations according to various embodiments of the present invention may be different from that illustrated in FIG. 5, and some operations illustrated in FIG. 5 may be omitted, the order between the operations may be changed, or the operations may be merged.

Referring to FIG. 5, the operation of authenticating the user of the target device 100 may include an operation of connecting the target device 100 to the charger 200 (S111), an operation of transmitting, by the information collection device 300, the first connection information to the management server 400 (S112), an operation of recognizing, by the management server 400, the information collection device 300 and acquiring the user authentication information (S113), an operation of transmitting, by the charger 200, the second connection information to the charging server 500 (S114), an operation of transmitting, by the charging server 500, the second connection information to the management server 400 (S115), an operation of determining whether the first connection information and the second connection information are connected (S116), an operation of approving (S117), and an operation of disapproving (S118).

In operation S111, the target device 100 and the charger 200 may be connected. According to an embodiment, a plug or power line of the charger 200 may be coupled to the target device 100, but the present invention is not limited thereto. After operation S111, operations S112 and S114 may be performed.

In operation S112, the information collection device 300 may transmit the first connection information to the management server 400. When the target vehicle and the charger 200 are connected, the information collection device 300 may recognize the connection of the charger 200. The information collection device 300 may generate the first connection information. According to an embodiment, the first connection information may include whether the target device 100 and the charger 200 are connected, the connection time, the SoC information, and the like collected by the information collection device 300. The information collection device 300 may transmit the first connection information to the management server 400. After operation S112, operation S113 may be performed.

In operation S113, the management server 400 may recognize the information collection device 300 and acquire the user authentication information. When the information processing device transmits the first connection information to the management server 400, the management server 400 may store the first connection information. Meanwhile, the management server 400 may recognize the information collection device 300 and specify the user of the target device 100 based on the identification information of the recognized information collection device 300. **In** addition, the management server 400 may acquire user authentication information of a specific user. After operation S113, operation S116 may be performed.

**In** operation S114, the charger 200 may generate the second connection information and transmit the second connection information to the charging server 500. The charger 200 may recognize the target device 100 connected to the charger 200 through at least one power cable included in a power line of the charger 200. According to an embodiment, the charger 200 may acquire information about the target device 100 through the power line. The charger 200 may generate the second connection information based on the acquired information about the target device 100. The second connection information may include whether the charger 200 and the target device 100 are connected, the connection time, the SoC information, and the like. The charger 200 may transmit the generated second connection information to the charging server 500. After operation S114, operation S115 may be performed.

**In** operation S115, the charging server 500 may transmit the second connection information to the management server 400. According to an embodiment, the charging server 500 may convert the second connection information received from the charger 200, but the present invention is not limited thereto. After operation S115, operation S116 may be performed.

**In** operation S116, the management server 400 may determine whether the first connection information and the second connection information match. The management server 400 may store the first connection information received from the information collection device 300 and the second connection information received from the charging server 500. In addition, the management server 400 may aggregate the first connection information and the second connection information. According to an embodiment, the management server 400 may compare the first connection information to the second connection information. When the management server 400 determines that the first connection information and the second connection information match, operation S117 may be performed. When the management server 400 determines that the first connection information and the second connection information do not match, operation S118 may be performed.

In operation S117, the management server 400 may approve the charging of the charger 200. After operation S117, operation S120 may be performed.

In operation S118, the management server 400 may not approve the charging of the charger 200. According to an embodiment, the management server 400 may end the charging of the target device 100 of the charger 200 through the charging server 500.

FIG. 6 is a flowchart specifically illustrating an operation of billing a fee to the user of the target device in FIG. 4.

The embodiment illustrated in FIG. 6 is only one embodiment, the order of operations according to various embodiments of the present invention may be different from that illustrated in FIG. 6, and some operations illustrated in FIG. 6 may be omitted, the order between the operations may be changed, or the operations may be merged.

Referring to FIG. 6, the operation of billing the fee to the user of the target device 100 may include an operation of transmitting, by the information collection device 300, the first charging information to the management server 400 (S131), an operation of transmitting, by the charger 200, the second charging information to the charging server 500 (S132), an operation of transmitting, by the charging server 500, the second charging information to the management server 400 (S133), an operation of aggregating, by the management server 400, the first charging information and the second charging information and calculating the fee (S 134), and an operation of billing the fee to the user (S135).

In operation S131, the information collection device 300 may transmit the first charging information to the management server 400. The information collection device 300 may generate first charging information. According to an embodiment, the information collection device 300 may store the power usage received by the target device 100 from the charger 200. According to another embodiment, the information collection device 300 may store the power usage used by the charger 200 to charge the target device 100. The information collection device 300 may generate first charging information based on the power usage. The first charging information may include the power usage of the charger 200 or the power usage received by the target device 100 from the charger 200. The information collection device 300 may transmit the generated first charging information to the management server 400. After operation S131, operation S134 may be performed.

In operation S132, the charger 200 may transmit the second charging information to the charging server 500. The charger 200 may generate second charging information. According to an embodiment, the charger 200 may store power usage used to charge the target device 100. The charger 200 may generate the second charging information based on the power usage. The second charging information may include the power usage of the charger 200. According to an embodiment, the second charging information may include charging state information of the target device 100. The charger 200 may transmit the generated second charging information to the charging server 500. After operation S132, operation S133 may be performed.

In operation S133, the charging server 500 may transmit the second charging information to the management server 400. The charging server 500 may transmit the second charging information to the management server 400. According to an embodiment, the charging server 500 may convert the second charging information received from the charger 200, but the present invention is not limited thereto. After operation S133, operation S134 may be performed.

In operation S134, the management server 400 may aggregate the first charging information and the second charging information and calculate the fee. The management server 400 may calculate the charging fee based on the first charging information and the second charging information. The management server 400 may calculate the charging fee based on the power usage acquired by aggregating the first charging information and the second charging information. After operation S134, operation S135 may be performed.

In operation S135, the management server 400 may bill the fee to the user of the target device 100. The management server 400 may bill the charging fee to the user of the target device 100 through the preset payment device. The management server 400 may recognize the information collection device 300, identify the corresponding user, and extract the data related to the identified user from the stored user data. The management server 400 may charge the fee to the user based on the extracted data.

The above description is merely the exemplary description of the technical spirit disclosed in this document, and those skilled in the art to which embodiments disclosed in this document pertain will be able to variously modify and change the present disclosure without departing from the essential characteristics of the embodiments disclosed in this document.

Therefore, the embodiments disclosed herein are not intended to limit the technical spirit disclosed herein, but for describing it, and the scope of the technical spirit disclosed herein is not limited by these embodiments. The scope of the technical spirit disclosed herein should be construed by the appended claims, and all technical spirits within the equivalent range should be construed as being included in the scope of this document.

## Claims

1. A server comprising:
a communication circuit configured to receive first charging information from an information collection device connected to a target device and receive second charging information transmitted from a charger corresponding to the target device from a charging server; and
a controller configured to manage a connection of the charger to the target device and a fee related to the use of the charger based on the first charging information and the second charging information.

2. The server of claim 1, wherein the controller recognizes the information collection device connected to the target device and checks user authentication information and payment information of the target device based on identification information of the recognized information collection device.

3. The server of claim 2, wherein the communication circuit transmits charging approval information and billing completion information to the charging server.

4. The server of claim 3, wherein the communication circuit transmits the charging approval information and the billing completion information to the information collection device through a long term evolution (LTE) communication network.

5. The server of claim 1, wherein the first charging information includes connection information about the charger and the target device recognized by the information collection device, and
the second charging information includes connection information about the charger and the target device recognized by the charger.

6. The server of claim 1, wherein the first charging information includes charging state information about the target device.

7. The server of claim 1, wherein the first charging information includes a power usage of the charger recognized by the information collection device, and
the second charging information includes a power usage of the charger recognized by the charger.

8. The server of claim 7, wherein the controller calculates a fee billed to a user of the target device using the first charging information and the second charging information.

9. A charging server comprising:
a communication circuit configured to transmit second charging information received from a charger to a management server and receive control information related to an operation of the charger from the management server; and
a controller configured to control the operation of the charger based on the control information.

10. The charging server of claim 9, wherein the controller controls the charger to charge a target device based on the control information.

11. The charging server of claim 9, wherein the communication circuit transmits billing completion information to the charger when receiving the billing completion information from the management server.

12. A charging system comprising:
a management server configured to receive first charging information from an information collection device connected to a target device; and
a charging server configured to receive second charging information from a charger corresponding to the target device and transmit the second charging information to the management server,
wherein the management server aggregates the first charging information and the second charging information and manages a connection of the charger to the target device and a fee related to the use of the charger.

13. The charging system of claim 12, wherein the management server transmits control information related to an operation of the charger to the charging server, and the charging server controls the operation of the charger based on the control information.

14. The charging system of claim 12, wherein the management server recognizes an information collection device connected to the target device and checks user authentication information and payment information of the target device based on identification information of the recognized information collection device.
